# EUROPEAN PATENT SPECIFICATION

(11) **EP 2 666 988 B1**
(45) Date of publication and mention of the grant of the patent: **27.07.2016**
(21) Application number: 13168420.1
(22) Date of filing: 20.05.2013
(51) Int. Cl.: F01N 13/18, B60K 13/04, F16L 55/035

(54) **Exhaust hanger**
Abgaselementaufhänger
Suspension d'échappement

(30) Priority: 21.05.2012 GB 201208903
(43) Date of publication of application: 27.11.2013
(73) Proprietor: Nissan Motor Manufacturing (UK) Ltd., Cranfield Bedfordshire MK43 0DB (GB)
(72) Inventor: Marin, Josep Martin, Barcelona 08040 (ES); Martin, Juan Manuel, Barcelona 08040 (ES); Camacho, Juan Manuel, Barcelona 08040 (ES); Barrachina, Vincente, Barcelona 08040 (ES)

(56) References cited:
- WO-A2-2012/069142
- FR-A- 1 434 349
- JP-A- H09 177 887
- JP-A- H09 189 217
- JP-A- H11 230 262

## Description

### Technical Field of the Invention

The present invention relates to an exhaust hanger for suspending an exhaust system from a vehicle body.

### Background to the Invention

It is known to suspend an exhaust system from a vehicle body using a hanger having a main body of a resilient, elastomeric material such as rubber. Exhaust hangers typically have a pair of suspension openings defined in the body. The suspension openings are spaced from one another and extend through the body along parallel axes for receipt of respective, generally parallel extending hanger rods, one fixed to the body of the vehicle and the other fixed to an exhaust member. Often the two hanger rods are the same size and the two suspension openings are also of the same size. In some applications, however, the hanger rod on the vehicle body and the hanger rod on the exhaust are of different sizes, so the two suspension openings will be of correspondingly different sizes.

The size of the exhaust hanger rods used depends on the loads to be carried. So for example, a smaller vehicle having a lighter exhaust system may use smaller hanger rods than a larger vehicle having a heavier exhaust system. Indeed, in some vehicles different sized hanger rods might be needed to support different parts of an exhaust system. Motor vehicle manufacturers generally try to standardise the size of exhaust hanger rods used across their vehicle ranges, as this helps to simplify manufacture of the parts and assembly of the vehicle. For example, a vehicle manufacturer may adopt only two standard sizes: a large size and a small size. However, even this requires the use of at least two different exhaust hangers having suspension openings of the appropriate sizes. This adds to the cost and complexity of manufacture, as a range of hangers with appropriately sized suspension openings have to be produced, stored and controlled, to ensure that the correct hanger is provided for each vehicle during assembly and for aftermarket support.

An exhaust mounting with a hollow and elongate body is known from FR1,434,349. A further exhaust mounting with a symmetrical elongate body is known from WO2012/069,142. JP9-177,887 discloses an exhaust mounting comprising circular and lozenge shaped holes, while JP11-230,267 discloses a mounting comprising both circular and irregular elongate holes. JP9-189,217 discloses a mounting comprising circular and elongate holes.

There is a need then for an improved or alternative exhaust hanger which overcomes, or at least mitigates, some or all of the problems of the prior art exhaust hangers.

### Summary of the Invention

In accordance with a first aspect of the invention, there is provided an exhaust hanger comprising a body of resilient material, the body defining two sets of suspension openings for receiving hanger rods, each set consisting of two spaced suspension openings; wherein the body also comprises at least one elongate slot located between the two spaced suspension openings of at least one set; and whereinthe body also comprises abutment members arranged in pairs on opposite sides of the or each slot, said abutment members being configured to mutually engage to limit movement of the suspension openings in either set towards each other in use; wherein the suspension openings extend along parallel axes, the suspension openings in the first set being aligned in a first plane and the suspension openings of the second set being aligned in a second plane different from the first plane, wherein the first and second planes extend at an angle to one another; characterized in that: the body comprises a first pair of abutment members aligned on the first plane and a second pair of abutment members aligned on the second plane.

The elongate slot may extend between the two spaced suspension openings of at least one set, and preferably both sets.

The provision of two sets of suspension openings for hanger rods in an exhaust hanger in accordance with the invention enables the hanger to be configured for use with at least two different sets of hanger rods. This enables hangers in accordance with the invention to be used in a greater range of vehicle applications. For example, if a vehicle manufacturer uses only two different sizes of hanger rods over its vehicle range, then a hanger in accordance with the invention with two correspondingly sized sets of suspension holes can be used over the entire vehicle range. This simplifies manufacture, as a reduced number of different hangers are required to be produced, stored and controlled. It also allows for a reduction in manufacturing costs of the hanger, which can be produced in larger quantities; with a reduced variety of moulding tools.

One or more elongate slots are used in the hanger of the invention because an elongate slot, particularly where it has an irregular internal profile, can be tuned in several diverse ways to give desired characteristics for bump absorption, and to a lesser extent for vibration absorption.

The or each slot may have a length and a width, and a longitudinal axis along its length; and the or each slot may be substantially symmetrical about its longitudinal axis.

The or each slot may have two opposed ends, and may be wider at at least one end thereof than at at least one, point between said ends.

The exhaust hanger may be arranged such that in use, the or each slot is inclined to a horizontal axis of a vehicle when the vehicle is on a substantially level surface; and in that the or each slot is also inclined to a vertical axis of said vehicle when said vehicle is on a substantially level surface.

The slot or slots are arranged to be neither vertical nor horizontal when in use, so that they are effective in damping both vertical and horizontal movements of the exhaust system. This is particularly helpful in avoiding the incidence of drumming noises induced in vehicle body panels surrounding a vehicle luggage area, which can act as a sound box or amplifier.

The external walls of the hanger body may likewise be arranged in use to be neither vertical nor horizontal with reference to a ground plane. This may be helpful in packaging the exhaust hanger around an exhaust silencer, and/or other body and exhaust components.

At least one of the suspension openings in a first one of the sets may be differently dimensioned/and or profiled from at least one of the suspension openings in a second one of the sets. In one embodiment, the suspension openings in each set are of the same dimensions, the suspension openings of the first set being differently dimensioned from the suspension openings of the second set. The suspension openings of the first set may be dimensioned to receive hanger rods of a first size and the suspension openings of the second set may be dimensioned to receive hanger rods of a second size, different from the first size.

The first and second planes may extend orthogonally to one another. The body may be generally square in lateral cross section and the first and second planes may be aligned diagonally of the square section.

The abutment members may each have an apex, the apexes of the abutment members in the first pair of abutment members being aligned on the first plane and the apexes of the abutment members in the second pair of abutment members being aligned on the second plane. The abutment members may be substantially triangular, or may have substantially triangular head regions.

The hanger may comprise two slots which intersect each other. At least one slot may pass through a first plane of alignment of suspension openings; while at least one slot may pass through a second plane of alignment of suspension openings.

The body may define a central through opening, the suspension openings in each set being positioned on opposite sides of the central through opening. The central through opening may be shaped like a cross, in which case the arms of the cross are preferably aligned substantially on planes equi-spaced between the first and second planes.

In accordance with a second aspect of the invention, there is provided an exhaust hanger comprising a body of resilient material, the body defining two sets of suspension openings for receiving hanger rods, each set consisting of two spaced suspension openings, the suspension openings of the first set being dimensioned to receive hanger rods of a first size and the suspension openings of the second set being dimensioned to receive hanger rods of a second size, different from the first size.

### Detailed Description of the Invention

In order that the invention may be more clearly understood embodiments thereof will now be described, by way of example only, with reference to the accompanying drawings, of which:
Figure 1 is a view from the front of an exhaust hanger in accordance with a first embodiment of the invention;
Figure 2 is a side view of part of a vehicle illustrating use of the exhaust hanger of Figure 1 to suspend an exhaust system from the vehicle body using a first set of suspension openings;
Figure 3 is a cross sectional view taken on line X-X of Figure 2;
Figure 4 is a view similar to that of Figure 3, but showing the hanger supporting an exhaust system using a second set of suspension openings dimensioned to receive smaller hanger rods than the first set of suspension openings;
Figure 5 is a perspective view of an exhaust hanger in accordance with a second embodiment of the invention;
Figure 6 is a front view of the exhaust hanger of Figure 5, showing the hanger oriented for use in suspending an exhaust system using a first set of suspension openings;
Figure 7 is a view similar to that of Figure 6, showing the hanger oriented for use in suspending an exhaust system using a second set of suspension openings;
Figure 8 is a view in isolation of the exhaust hanger slots 30 and 30A of the first embodiment of the hanger 10 as shown in Figure 1; and:
Figure 9 is a view similar to Figure 8, but showing the exhaust hanger slot 130 of the second embodiment of the hanger 110 as shown in Figures 5 to 7. It should be noted that for clarity of illustration, the hangers of Figures 3 and 4 are shown in essentially planar form, with negligible thickness; while the hanger rods are shown at an angle to a more realistic longitudinal orientation, in order to show the rods in "three dimensional" form.

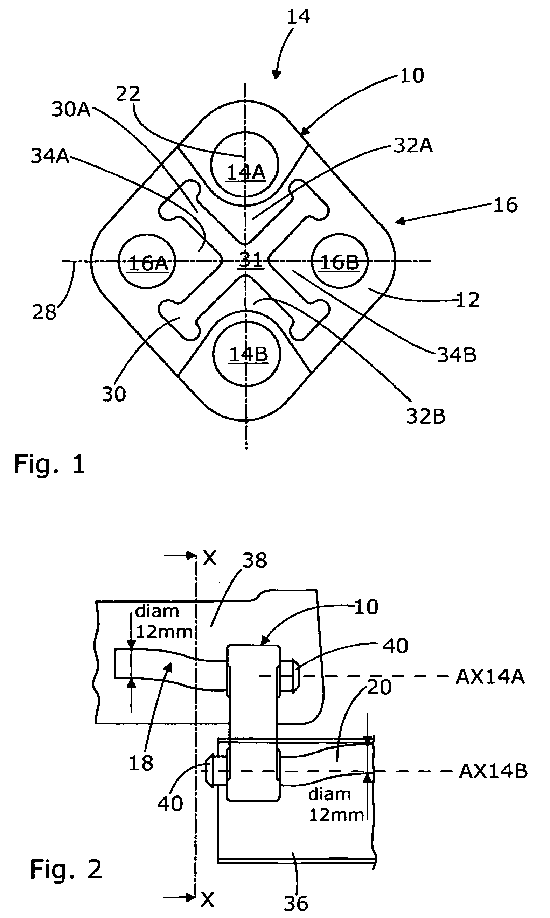

With reference to Figures 1 to 4 initially, an exhaust hanger 10 in accordance with a first aspect of the invention comprises a body 12 of a resilient material, which may be an elastomeric material such as rubber or synthetic rubber. The body 12 may be moulded or formed as part of an elongate extrusion, and cut to length. The body 12 in its relaxed state has a generally square shaped lateral section with rounded corners, as can be seen in Figure 1.

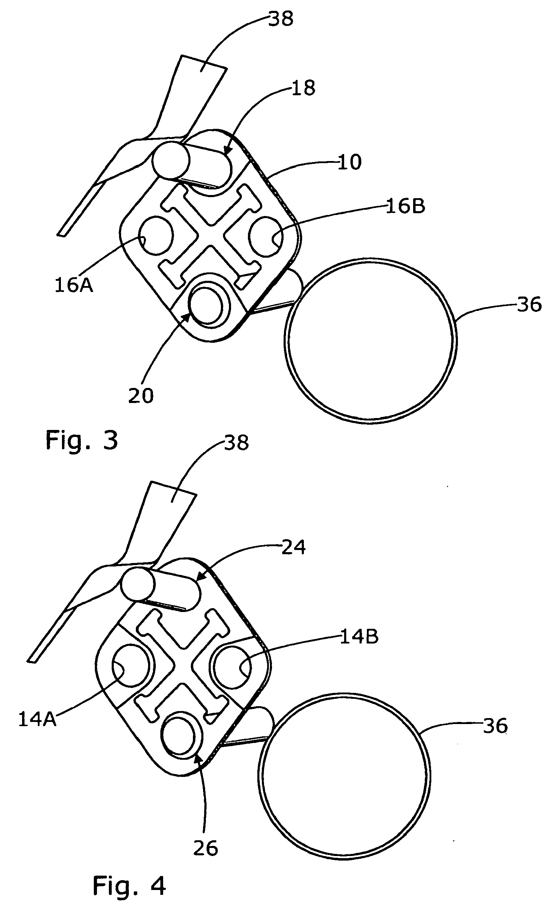

A first set 14 of spaced suspension openings 14A, 14B extend lengthways through the body 12 along parallel axes AX14A and AX14B (Fig. 2) to receive separate generally parallel hanger rods 18, 20 (Figs. 2 and 3). The suspension openings 14A, 14B of the first set are aligned on a first plane 22.

A second set 16 of spaced suspension openings 16A, 16B extend lengthways through the body 12 along parallel axes to receive separate generally parallel hanger rods 24, 26 (Fig. 4). The suspension openings 16A, 16B of the second set are offset from the suspension openings 14A, 14B of the first set and are aligned on a second plane 28 which is different from the first plane. The first and second planes are angled relative to one another. In the present embodiment, the first and second planes 22, 28 are aligned orthogonally of one another; and each extends diagonally relative to the square section of the body, such that they cross centrally of the body's lateral section.

The suspension openings 14A, 14B of the first set are dimensioned to receive larger hanger rods than the suspension openings 16A, 16B of the second set. In the present embodiment, the suspension openings 14A, 14B, 16A, 16B are all cylindrical bores configured to receive generally round (that is, circular) section hanger rods. The suspension openings 14A, 14B in the first set have a diameter of 11.5mm and are configured for use with hanger rods 18, 20 having a diameter of 12mm, whilst the suspension openings 16A, 16B have a diameter of 9.5mm for use with hanger rods 24, 26 having a diameter of 10mm.

A central opening 31 comprising intersecting slots 30, 30A extends through the body between the suspension openings in each set. The central opening 31 allows the body to more easily expand and contract in a lateral plane of the hanger body in use to accommodate movement of the exhaust system relative to the body of the vehicle, say as a result of the vehicle travelling over a bump in the road. The central opening 31 is in the shape of a cross with arms 30, 30A of equal length, the arms being aligned equi-spaced between the first and second planes 22, 28.

The body 12 is designed to dampen relative movement between the exhaust and the vehicle body. To this end, the body 12 is profiled about the central opening to define abutments 32A, 32B; and 34A, 34B which limit movement of the suspension openings in each set towards each other in use. The abutments are arranged in pairs, with a first pair of abutments 32A, 32B being arranged on opposite sides of the central through opening 31 in line with the suspension openings 14A, 14B of the first set, on the first plane 22; and a second pair of abutments 34A, 34B arranged on opposite sides of the central through opening 31 in line with the suspension openings 16A, 16B of the second set, on the second plane 28. When the exhaust hanger 10 is used to suspend an exhaust system using the first set of suspension openings 14A, 14B, as illustrated in Figure 3, the first pair of abutments 32A, 32B are operative to limit movement of the suspension openings 14A, 14B in the first set towards each other, thus limiting compression of the exhaust hanger in a direction parallel to the first plane 22.

Alternatively, when the exhaust hanger is used to suspend an exhaust system using the second set of suspension openings 16A, 16B, as illustrated in Figure 4, the second pair of abutments 34A, 34B are operative to limit movement of the suspension openings 16A, 16B in the second set towards each other, thus limiting compression of the exhaust hanger in a direction parallel to the second plane 28. The abutments 32A, 32B; and 34A, 34B are generally triangular in shape, having smoothed round apexes that align with the first or second plane 22, 28 of their respective suspension openings 14A, 14B; and 16A, 16B. The round apexes of opposed abutments contact each other to limit compression, the maximum limitation being achieved when the sides of the slots adjacent to the abutments also contact one another.

Figures 2 and 3 illustrate use of the hanger 10 to suspend an exhaust system 36 from part of a vehicle body 38 by means of a pair of hanger rods 18, 20. For ease of illustration, exhaust system 36 is shown as if translucent in Figure 2; and in sectional form in Figs. 3 and 4. A first hanger rod 18 is attached at one end to the vehicle body 38 by means of welding or by any other suitable method. The first hanger rod 18 extends generally parallel to a floor pan of the vehicle in a direction that is generally horizontal when the vehicle is positioned on flat ground. The rod 18 is shaped so that its free end is spaced from the vehicle body 38 to allow sufficient room for the hanger 10 to be mounted on the rod. A second hanger rod 20 is attached at one end to a part of the exhaust system 36 by means of welding or by any other suitable method. The second hanger rod 20 extends generally parallel to the first hanger rod 18 when the exhaust is in its nominal desired position on the vehicle. The second hanger rod 20 is shaped so that its free end is spaced from the exhaust system 36 to allow sufficient room for the hanger 10 to be mounted on the rod.

The first and second hanger rods 18, 20 are each cylindrical over the majority of their length, including at least the region where the exhaust hanger 10 locates on the rod, having a diameter of about 12mm Each hanger rod 18, 20 has an enlarged diameter head region 40 at its free end to prevent the exhaust hanger 10 from sliding off the rod unintentionally once it is mounted. The head region is chamfered on the outside to make it easier for the head region 40 to be forced through a respective suspension opening in the hanger when the hanger is being fitted.

As shown in Figure 3, for suspending an exhaust system using 12mm hanger rods 18, 20, the hanger 10 is positioned so that the first set of suspension openings 14A, 14B, which are dimensioned for use with the 12mm hanger rods, align with the rods. Typically, the hanger rods are located vertically one below the other as shown in use. The hanger rods 18, 20 are inserted through respective ones of the suspension openings 14A, 14B in the first set in the usual manner, and the hanger 10 functions in a largely conventional manner to suspend the exhaust system 36.

Figure 4 shows an exhaust suspension arrangement similar to that shown in Figure 3, except that the hanger rods 24, 26 are smaller, each having a diameter of about 10mm. In this case, the hanger 10 is orientated so that the suspension openings 16B, 16A in the second set, which are dimensioned for use with the 10mm hanger rods, align with the rods 24, 26, which are then inserted through respective suspension openings 16B, 16A.

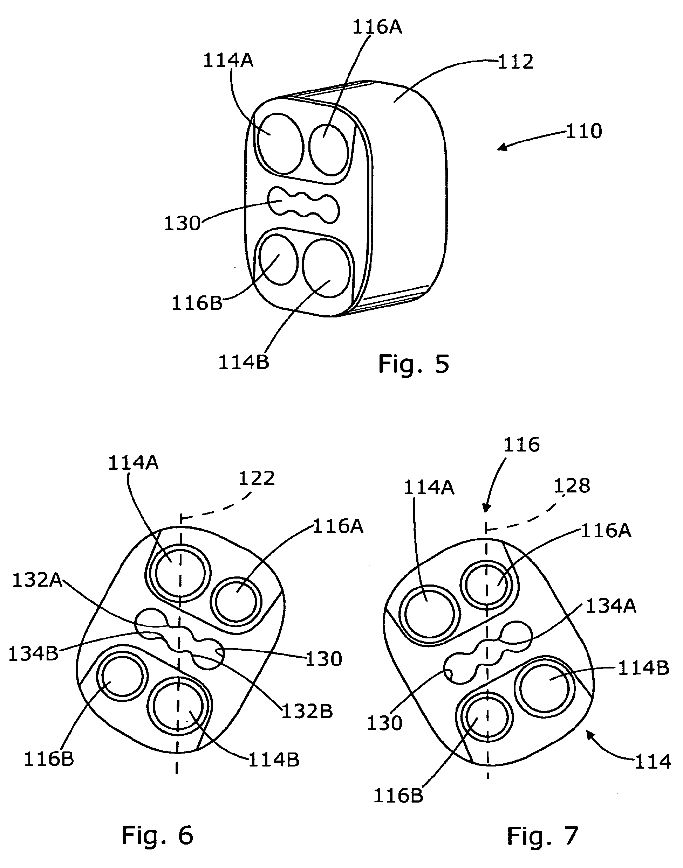

Figures 5 to 7 illustrate a second embodiment of an exhaust hanger 110 in accordance with the invention. The same reference numbers, but increased by 100, will be used to identify features in common with the first embodiment.

As with the first embodiment, the hanger 110 has a body 112 made of a resilient material, which may be an elastomeric material such as rubber or synthetic rubber. The body defines two sets of spaced suspension openings 114A, 114B; and 116A, 116B for receiving hanger rods. The suspension openings 114A, 114B of the first set have a diameter of 11.5mm for receiving hanger rods having a diameter of 12mm, and are aligned on a first plane 122. The suspension openings 116A, 116B of the second set have a diameter of 9.5mm for receiving hanger rods having a diameter of 10mm, and are aligned on a second plane 128. The first and second planes are angled relative to one another, and intersect at a position substantially centrally of the lateral section of the body 112.

Figure 6 shows the hanger 110 oriented for use in suspending an exhaust using the first set of suspension openings 114A, 114B; which are aligned one above the other so that the first plane 122 extends substantially vertically. In this configuration, the hanger can be mounted to hanger rods having a diameter of 12mm. Figure 7 shows the hanger 110 oriented for use in suspending an exhaust using the second set of suspension openings 116A, 116B; which are aligned one above the other so that the second plane 128 extends substantially vertically. In this configuration, the hanger 110 can be mounted to hanger rods having a diameter of 10mm.

The body 112 defines a central through opening comprising a slot 130 which allows the body to more easily expand and contract in a lateral plane of the body in use to accommodate movement of the exhaust system relative to the body of the vehicle. The slot 130 in this embodiment is elongate with curved ends at either side. The body is profiled about the central opening to define abutments 132A, 132B, 134A, and 134B, which limit compression of the hanger body in use so as to dampen relative movement between the exhaust and the vehicle body; and to reduce the risk of the exhaust knocking against the vehicle body.

The hanger body 112 of the second embodiment is generally rectangular in lateral section with rounded corners; and in use is orientated with its shorter side extending generally in a lateral direction. This may be advantageous where there is restricted clearance in a lateral direction between the exhaust and the vehicle body to accommodate the hanger.

It can be seen then that a hanger 10, 110 in accordance with the invention can be used to suspend an exhaust using either one of the two sets of suspension openings 14A, 14B, and 16A, 16B; or 114A, 114B, and 116A, 116B; enabling the hanger to be used with two differently sized sets of hanger rods 18, 20; or 24, 26. The ability to use the same hanger with differently sized hanger rods enables the same hanger to used in more vehicle applications, thus reducing the number of different hangers required; and allowing the hanger to be produced in greater volumes, leading to a reduction in the cost of manufacture. The storage and control of parts is also simplified. In a preferred arrangement, a vehicle manufacturer will use only two standard sized hanger rods over the whole of its vehicle range, so that the same hanger can be used throughout.

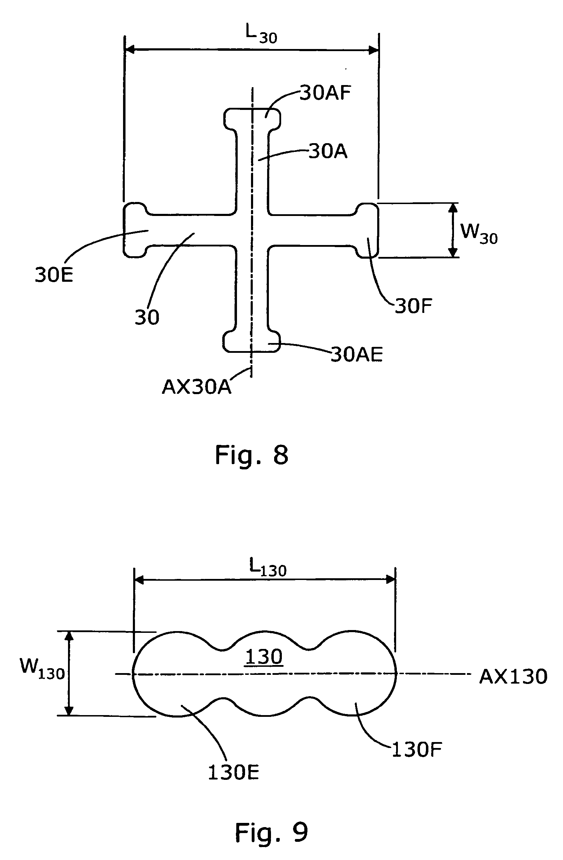

Figures 8 and 9 show dimensions and features of the elongate slots in the first and second embodiments of the exhaust hanger. Figure 8 shows the length L₃₀ and width W₃₀ of slot 30, which has two ends 30E and 30F. The width of slot 30A would typically, but not necessarily, be equal to the width of slot 30. An axis AX30A of slot 30A, and slot ends 30AE and 30AF, are also shown. Figure 9 likewise shows the length L₁₃₀ and width W₁₃₀ of slot 30, which has two ends 130E and 130F. An axis AX130 of slot 130 is also shown.

The above embodiments are described by way of example only. Many variations are possible without departing from the scope of the invention as defined in the appended claims. For example, whilst in the embodiments disclosed the hangers have been adapted for use with 10mm and 12mm cylindrical hanger rods, it will be appreciated that hangers in accordance with the invention can be readily adapted for use with hanger rods of different dimensions and/or cross sectional shape. Furthermore, whilst in most applications it is expected that the suspension openings in each set will be of the same general dimensions for use with the hanger rods of the same size, this is not essential; and at least one set could be adapted to accommodate differently sized hanger rods. For example, in some applications it may be advantageous to use differently sized, or indeed differently shaped, hanger rods on the vehicle body than on the exhaust. Exhaust hangers in accordance with the invention can be adapted for use with such arrangements, provided they comprise two set of suspension openings, with each set being configured for use with a particular hanger rod arrangement. In addition, whilst for practical purposes it is expected that exhaust hangers in accordance with the invention will only have two sets of suspension openings, hangers with more than two sets of suspension openings are possible.

## Claims

1. An exhaust hanger (10, 110) comprising a body (12, 112) of resilient material, the body defining two sets (14, 16; 114, 116) of suspension openings for receiving hanger rods (18, 20; 24, 26), each set consisting of two spaced suspension openings (14A, 14B; 16A, 16B; 114A, 114B; 116A, 116B);
wherein the body (12, 112) also comprises at least one elongate slot (30, 30A, 130) located between the two spaced suspension openings (14A, 14B; 16A, 16B; 114A, 114B; 116A, 116B) of at least one set; and wherein the body (12, 112) also comprises abutment members (32A, 32B; 34A, 34B; 132A, 132B; 134A, 134B) arranged in pairs on opposite sides of the or each slot (30, 30A, 130), said abutment members being configured to mutually engage to limit movement of the suspension openings in either set (14, 16; 114, 116) towards each other in use;
wherein the suspension openings extend along parallel axes (AX14A, AX14B), the suspension openings (14A, 14B; 114A, 114B) in the first set (14; 114) being aligned in a first plane (22; 122) and the suspension openings (16A, 16B; 116A, 116B) of the second set (16; 116) being aligned in a second plane (28; 128) different from the first plane; and wherein the first and second planes (22, 122; 28, 128) extend at an angle to one another;
**characterized in that**:
the body (12, 112) comprises a first pair of abutment members (32A, 32B; 132A, 132B) aligned on the first plane (22; 122) and a second pair of abutment members (34A, 34B; 134A, 134B) aligned on the second plane (28; 128).

2. An exhaust hanger (10, 110) as claimed in claim 1, wherein the or each slot (30, 30A, 130) has a length (L₃₀, L₁₃₀) and a width (W₃₀, W₁₃₀), and has a longitudinal axis (AX30A, AX130) along its length; and wherein the or each slot (30, 30A, 130) is substantially symmetrical about its longitudinal axis.

3. An exhaust hanger (10, 110) as claimed in claim 1 or claim 2, wherein the or each slot (30, 30A, 130) has two opposed ends (30E, 30F; 30AE, 30AF; 130E, 130F), and is wider at at least one end thereof than at at least one point (32A, 34B; 34A, 32B; 132A, 134B; 134A, 132B) between said ends.

4. An exhaust hanger (10, 110) as claimed in any preceding claim, arranged such that in use, the or each slot (30, 30A, 130) is inclined to a horizontal axis of a vehicle body (38) when the vehicle is on a substantially level surface; and in that the or each slot (30, 30A, 130) is also inclined to a vertical axis of said vehicle body (38) when said vehicle is on a substantially level surface.

5. An exhaust hanger (10, 110) as claimed in any preceding claim, wherein at least one of the suspension openings (14A, 14B; 114A, 114B) in a first one (14; 114) of the sets is differently dimensioned and/or profiled from at least one of the suspension openings (16A, 16B; 116A, 116B) in a second one (16; 116) of the sets.

6. An exhaust hanger (10, 110) as claimed in any preceding claim, wherein the suspension openings (14A, 14B; 16A, 16B; 114A, 114B; 116A, 116B) in each set are of the same dimensions, the suspension openings (14A, 14B; 114A, 114B) of the first set (14; 114) being differently dimensioned from the suspension openings (16A, 16B; 116A, 116B) of the second set (16; 116).

7. An exhaust hanger (10, 110) as claimed in claim 6, wherein the suspension openings (14A, 14B; 114A, 114B) of the first set (14; 114) are dimensioned to receive hanger rods (18, 20) of a first size and the suspension openings (16A, 16B; 116A, 116B) of the second set (16; 116) are dimensioned to receive hanger rods (24, 26) of a second size, different from the first size.

8. An exhaust hanger (10, 110) as claimed in claim 7, wherein the abutment members (32A, 32B; 34A, 34B; 132A, 132B; 134A, 134B) each have an apex, the apexes of the abutment members in the first pair of abutment members (32A, 32B; 132A, 132B) being aligned on the first plane (22; 122), and the apexes of the abutment members in the second pair of abutment members (34A, 34B; 134A, 134B) being aligned on the second plane (28; 128).

9. An exhaust hanger (10, 110) as claimed in claim 8, wherein the abutment members (32A, 32B; 34A, 34B; 132A, 132B; 134A, 134B) are triangular or have substantially triangular head regions.

10. An exhaust hanger (10) as claimed in any preceding claim, comprising two slots (30, 30A) which intersect each other.

11. An exhaust hanger (10) as claimed in claim 10, wherein at least one slot (30) passes through the first plane (22), and at least one slot (30A) passes through the second plane (28).

12. An exhaust hanger (10) as claimed in claim 10, wherein the body (12) comprises a central through opening (31) shaped like a cross, the arms (30, 30A) of the cross being aligned substantially on planes equi-spaced between the first and second planes (22, 28).

## Patentansprüche

1. Auspuffaufhängung (10, 110), umfassend einen Körper (12, 112) aus elastischem Material, wobei der Körper zwei Sätze (14, 16; 114, 116) von Aufhängungsöffnungen zum Aufnehmen von Aufhängungsstäben (18, 20; 24, 26) umfasst, wobei jeder Satz aus zwei beabstandeten Aufhängungsöffnungen (14A, 14B; 16A, 16B; 114A, 114B; 116A, 116B) besteht;
wobei der Körper (12, 112) ferner wenigstens einen länglichen Schlitz (30, 30A, 130) umfasst, angeordnet zwischen den zwei voneinander beabstandeten Aufhängungsöffnungen (14A, 14B; 16A, 16B; 114A, 114B; 116A, 116B) wenigstens eines Satzes; und wobei der Körper (12, 112) auch Anstoßelemente (32A, 32B; 34A, 34B; 132A, 132B; 134A, 134B) umfasst, paarweise auf einander gegenüberliegenden Seiten des oder jedes Schlitzes (30, 30A, 130) angeordnet, wobei die Anstoßelemente konfiguriert sind, ineinander einzugreifen, um im Gebrauch die Bewegung der Aufhängungsöffnungen in jedem Satz (14, 16; 114, 116) zueinander hin zu beschränken;
wobei sich die Aufhängungsöffnungen entlang paralleler Achsen (AX14A, AX14B) erstrecken, wobei die Aufhängungsöffnungen (14A, 14B; 114A, 114B) in dem ersten Satz (14; 114) in einer ersten Ebene ausgerichtet sind (22; 122) und die Aufhängungsöffnungen (16A, 16B; 116A, 116B) des zweiten Satzes (16; 116) in einer zweiten Ebene (28; 128), die von der ersten Ebene verschieden ist, ausgerichtet sind; und wobei sich die erste und die zweite Ebene (22, 122; 28, 128) in einem Winkel zueinander erstrecken;
**dadurch gekennzeichnet, dass**:
der Körper (12, 112) Folgendes umfasst: ein Paar Anstoßelemente (32A, 32B; 132A, 132B), die in der ersten Ebene (22; 122) ausgerichtet sind, und ein Paar Anstoßelemente (34A, 34B; 134A, 134B), die in der zweiten Ebene (28; 128) ausgerichtet sind.

2. Auspuffaufhängung (10, 110) nach Anspruch 1, wobei der oder jeder Schlitz (30, 30A, 130) eine Länge (L₃₀, L₁₃₀) und eine Breite (W₃₀, W₁₃₀) aufweist und entlang seiner Länge eine Längsachse (AX30A, AX130) aufweist; und wobei der oder jeder Schlitz (30, 30A, 130) im Wesentlichen um seine Längsachse symmetrisch ist.

3. Auspuffaufhängung (10, 110) nach Anspruch 1 oder 2, wobei der oder jeder Schlitz (30, 30A, 130) zwei einander gegenüberliegende Enden (30E, 30F; 30AE, 30AF; 130E, 130F) aufweist und an wenigstens einem Ende davon breiter ist als an wenigstens einem Punkt (32A, 34B; 34A, 32B; 132A, 134B; 134A, 132B) zwischen den Enden.

4. Eine Auspuffaufhängung (10, 110) nach einem der vorhergehenden Ansprüche, derart angeordnet, dass im Gebrauch der oder jeder Schlitz (30, 30A, 130) zu einer horizontalen Achse eines Fahrzeugkörpers (38) hin geneigt ist, wenn sich das Fahrzeug auf einer im Wesentlichen ebenen Oberfläche befindet; und wobei der oder jeder Schlitz (30, 30A, 130) auch zu einer vertikalen Achse des Fahrzeugkörpers (38) hin geneigt ist, wenn sich das Fahrzeug auf einer im Wesentlichen ebenen Oberfläche befindet.

5. Auspuffaufhängung (10, 110) nach einem der vorhergehenden Ansprüche, wobei wenigstens eine der Aufhängungsöffnungen (14A, 14B; 114A, 114B) in einem ersten (14; 114) der Sätze anders dimensioniert und/oder profiliert ist als wenigstens eine der Aufhängungsöffnungen (16A, 16B; 116A, 116B) in einem zweiten (16; 116) der Sätze.

6. Auspuffaufhängung (10, 110) nach einem der vorhergehenden Ansprüche, wobei die Aufhängungsöffnungen (14A, 14B; 16A, 16B; 114A, 114B; 116A, 116B) in jedem Satz dieselben Abmessungen aufweisen, wobei die Aufhängungsöffnungen (14A, 14B; 114A, 114B) des ersten Satzes (14; 114) anders dimensioniert sind als die Aufhängungsöffnungen (16A, 16B; 116A, 116B) des zweiten Satzes (16; 116).

7. Auspuffaufhängung (10, 110) nach Anspruch 6, wobei die Aufhängungsöffnungen (14A, 14B; 114A, 114B) des ersten Satzes (14; 114) dimensioniert sind, um Aufhängungsstäbe (18, 20) einer ersten Größe aufzunehmen und die Aufhängungsöffnungen (16A, 16B; 116A, 116B) des zweiten Satzes (16; 116) dimensioniert sind, um Aufhängungsstäbe (24, 26) einer zweiten Größe, die von der ersten Größe verschieden ist, aufzunehmen.

8. Auspuffaufhängung (10, 110) nach Anspruch 7, wobei die Anstoßelemente (32A, 32B; 34A, 34B; 132A, 132B; 134A, 134B) jeweils eine Spitze aufweisen, wobei die Spitzen der Anstoßelemente des ersten Paares von Anstoßelementen (32A, 32B; 132A, 132B) in der ersten Ebene (22; 122) ausgerichtet sind und die Spitzen der Anstoßelemente im zweiten Paar von Anstoßelementen (34A, 34B; 134A, 134B) in der zweiten Ebene (28; 128) ausgerichtet sind.

9. Auspuffaufhängung (10, 110) nach Anspruch 8, wobei die Anstoßelemente (32A, 32B; 34A, 34B; 132A, 132B; 134A, 134B) dreieckig sind oder im Wesentlichen dreieckige Kopfabschnitte aufweisen.

10. Auspuffaufhängung (10) nach einem der vorhergehenden Ansprüche, zwei einander schneidende Schlitze (30, 30A) umfassend.

11. Auspuffaufhängung (10) nach Anspruch 10, wobei wenigstens ein Schlitz (30) durch die erste Ebene (22) hindurch verläuft und wenigstens ein Schlitz (30A) durch die zweite Ebene (28) hindurch verläuft.

12. Auspuffaufhängung (10) nach Anspruch 10, wobei der Körper (12) eine kreuzförmige mittige durchgehende Öffnung (31) aufweist, wobei die Arme (30, 30A) des Kreuzes im Wesentlichen in Ebenen ausgerichtet sind, die gleichmäßig zwischen der ersten und der zweiten Ebene (22, 28) beabstandet sind.

## Revendications

1. Crochet d'échappement (10, 110) comprenant un corps (12, 112) d'un matériau élastique, le corps définissant deux jeux (14, 16 ; 114, 116) d'ouvertures de suspension pour recevoir des tiges de crochet (18, 20 ; 24, 26), chaque jeu consistant en deux ouvertures de suspension espacées (14A, 14B ; 16A, 16B ; 114A, 114B, 116A, 116B) ;
dans lequel le corps (12, 112) comprend également au moins une fente allongée (30, 30A, 130) située entre les deux ouvertures de suspension espacées (14A, 14B ; 16A, 16B ; 114A, 114B ; 116A, 116B) d'au moins un jeu ; et dans lequel le corps (12, 112) comprend également des éléments de butée (32A, 32B ; 34A, 34B ; 132A, 132B ; 134A, 134B) disposés par paires sur des côtés opposés de la ou de chaque fente (30, 30A, 130), lesdits éléments de butée étant configurés pour s'engager mutuellement afin de limiter le mouvement des ouvertures de suspension dans l'un ou l'autre des jeux (14, 16 ; 114, 116) les unes vers les autres en cours d'utilisation ;
dans lequel les ouvertures de suspension s'étendent le long d'axes parallèles (AX14A, AX14B), les ouvertures de suspension (14A, 14B ; 114A, 114B) du premier jeu (14 ; 114) étant alignées dans un premier plan (22 ; 122) et les ouvertures de suspension (16A, 16B ; 116A, 116B) du second jeu (16 ; 116) étant alignées dans un second plan (28 ; 128) différent du premier plan ; et dans laquelle les premier et second plans (22, 122 ; 28, 128) s'étendant en formant un angle l'un par rapport à l'autre ;
**caractérisé en ce que** :
le corps (12, 112) comprend une première paire d'éléments de butée (32A, 32B ; 132A, 132B), alignés sur le premier plan (22 ; 122) et une seconde paire d'éléments de butée (34A, 34B ; 134A, 134B) alignés sur le second plan (28 ; 128).

2. Crochet d'échappement (10, 110) selon la revendication 1, dans lequel la ou chaque fente (30, 30A, 130) a une longueur (L₃₀, L₁₃₀) et une largeur (W₃₀, W₁₃₀), et présente un axe longitudinal (AX30A, AX 130) suivant sa longueur ; et dans lequel la ou chaque fente (30, 30A, 130) est sensiblement symétrique autour de son axe longitudinal.

3. Crochet d'échappement (10, 110) selon la revendication 1 ou la revendication 2, dans lequel la ou chaque fente (30, 30A, 130) comporte deux extrémités opposées (30E, 30F ; 30AE, 30AF ; 130E, 130F), et est plus large à au moins une extrémité de celles-ci qu'à au moins un point (32A, 34B ; 34A, 32B ; 132A, 134B ; 134A, 132B) entre lesdites extrémités.

4. Crochet d'échappement (10, 110) selon l'une quelconque des revendications précédentes, agencé de telle sorte qu'en d'utilisation, la ou chaque fente (30, 30A, 130) est inclinée vers un axe horizontal d'une carrosserie de véhicule (38) lorsque le véhicule se trouve sur une surface sensiblement plane ; et en ce que la ou chaque fente (30, 30A, 130) est également inclinée vers un axe vertical de ladite carrosserie de véhicule (38) lorsque ledit véhicule se trouve sur une surface sensiblement plane.

5. Crochet d'échappement (10, 110) selon l'une quelconque des revendications précédentes, dans lequel au moins l'une des ouvertures de suspension (14A, 14B ; 114A, 114B) d'un premier jeu (14 ; 114) a des dimensions et/ou un profilé différents d'au moins l'une des ouvertures de suspension (16A, 16B ; 116A, 116B) d'un second jeu (16 ; 116).

6. Crochet d'échappement (10, 110) selon l'une quelconque des revendications précédentes, dans lequel les ouvertures de suspension (14A, 14B ; 16A, 16B ; 114A, 114B ; 116A, 116B) dans chaque jeu ont les mêmes dimensions, les ouvertures de suspension (14A, 14B ; 114A, 114B) du premier jeu (14 ; 114) ayant des dimensions différentes des ouvertures de suspension (16A, 16B ; 116A, 116B) du second jeu (16 ; 116).

7. Crochet d'échappement (10, 110) selon la revendication 6, dans lequel les ouvertures de suspension (14A, 14B ; 114A, 114B) du premier jeu (14 ; 114) sont dimensionnées pour recevoir des tiges de crochet (18, 20) d'une première taille et les ouvertures de suspension (16A, 16B ; 116A, 116B) du second jeu (16 ; 116) sont dimensionnées pour recevoir des tiges de crochet (24, 26) d'une seconde taille, différente de la première taille.

8. Crochet d'échappement (10, 110) selon la revendication 7, dans lequel les éléments de butée (32A, 32B ; 34A, 34B ; 132A, 132B ; 134A, 134B) ont chacun un sommet, les sommets des éléments de butée dans la première paire d'éléments de butée (32A, 32B ; 132A, 132B) étant alignés sur le premier plan (22 ; 122) et les sommets des éléments de butée dans la seconde paire d'éléments de butée (34A, 34B ; 134A, 134B) étant alignés sur le second plan (28 ; 128).

9. Crochet d'échappement (10, 110) selon la revendication 8, dans lequel les éléments de butée (32A, 32B ; 34A, 34B ; 132A, 132B ; 134A, 134B) sont triangulaires ou ont des régions de tête sensiblement triangulaires.

10. Crochet d'échappement (10) selon l'une quelconque des revendications précédentes, comprenant deux fentes (30, 30A) qui se coupent l'une l'autre.

11. Crochet d'échappement (10) selon la revendication 10, dans lequel au moins une fente (30) passe à travers le premier plan (22), et au moins une fente (30A) passe à travers le second plan (28).

12. Crochet d'échappement (10) selon la revendication 10, dans lequel le corps (12) comporte une ouverture traversante centrale (31) en forme de croix, les bras (30, 30A) de la croix étant sensiblement alignés sur des plans équidistants entre les premier et second plans (22, 28).
